# EUROPÄISCHE PATENTSCHRIFT

(11) **EP 0 976 945 B1**
(45) Veröffentlichungstag und Bekanntmachung des Hinweises auf die Patenterteilung: **02.05.2003**
(21) Anmeldenummer: 99111457.0
(22) Anmeldetag: 12.06.1999
(51) Int. Cl.: F16D 69/02

(54) **Verfahren zur Herstellung von Verstärkungsfasern enthaltenden Reibungskörper**
Method for manufacturing a fiber reinforced friction element
Procédé de fabrication d'un élément de friction renforcé par des fibres

(30) Priorität: 31.07.1998 DE 19834542
(43) Veröffentlichungstag der Anmeldung: 02.02.2000
(73) Patentinhaber: DaimlerChrysler AG, 70567 Stuttgart (DE)
(72) Erfinder: Rebstock, Kolja, 89073 Ulm (DE)

(56) Entgegenhaltungen:
- DE-A- 4 438 456
- DE-A- 19 711 831
- DE-C- 4 438 455
- DE-C- 19 711 829

## Beschreibung

Die vorliegende Erfindung betrifft ein Verfahren zur Herstellung Verstärkungsfasern enthaltender Körper, wobei Fasern, Faserbündel oder Faseragglomerate mit wenigstens einem carbonisierbaren Bindemittel und ggf. weiteren Füll- bzw. Zusatzstoffen zu einer Preßmasse vermischt werden und die Preßmasse zu einem Verstärkungsfasern enthaltenden Körper gepreßt wird, wobei eine Preßvorrichtung mit einer endformnahen Preßform verwendet wird.

Das die vorliegende Erfindung betreffende Verfahren wird insbesondere bei der Herstellung von kohlefaserverstärkten keramischen Verbundwerkstoffen angewendet. Dazu werden in einem ersten Verfahrensschritt Gewebe oder Matten aus Kohlenstoff-Fasern oder Faserstoffbündel, die gegebenenfalls mit einem Bindemittel beschichtet sind, zusammen mit weiteren Bindemitteln und Füllstoffen gemischt. Die Mischung wird zu einem sogenannten Grünling oder CFK-Körper verpreßt und anschließend pyrolysiert. Dabei wandelt sich das Bindemittel oder wenigstens eines der Bindemittel in eine poröse Kohlenstoff-Matrix um. Der resultierende kohlenstoffhaltige poröse Körper oder C/C-Körper wird anschließend mit Silizium schmelzinfiltriert. Die vorliegende Erfindung betrifft den ersten Verfahrensschritt, nämlich die Herstellung eines Grünlings oder CFK-Körpers.

Dieses Verfahren ist z. Bsp. in der DE 44 38 455 C1 beschrieben. Diese Druckschrift befaßt sich mit der Herstellung innenbelüfteter Bremsscheiben, wobei die Belüftungskanäle durch Fügen von faserverstärkten Körpern unterschiedlicher Geometrie zustandekommen. Problematisch bei diesem Verfahren ist, daß bei den bekannten Verfahren Fasergewebe oder Fasermatten verwendet werden, die mit Bindemittel getränkt und übereinandergeschichtet werden. Daraus resultiert ein anisotroper Körper, dessen Fasern in zwei Vorzugsrichtungen entsprechend den Gewebelagen, orientiert sind. Dies schafft Probleme beim Fügen mehrerer derartiger Körper zu einer komplexen Struktur, da die Verbindung der einzelnen Elemente untereinander nicht stabil genug ist.

Ein weiteres Verfahren ist in der unveröffentlichten deutschen Patentanmeldung 197 11 829.1 beschrieben. Dabei werden statt Fasergeweben oder Fasermatten einzelne Fasern oder Faserstoffbündel verwendet, die zufallsbedingt in alle drei Richtungen orientiert sind. Daraus resultiert wiederum ein isotroper Körper mit in allen drei Raumrichtungen im wesentlichen gleichen Eigenschaften. Es bleibt das Problem, derartige Körper, so zu fügen, daß eine stabile Verbindung an den Fügestellen hergestellt wird.

Die Aufgabe der vorliegenden Erfindung besteht daher darin, ein Verfahren der oben genannten Art zu schaffen, das es ermöglicht, gefügte Körper mit stabilen Verbindungen an den Fügestellen herzustellen.

Die Lösung besteht darin, daß die Preßmasse in einer Preßform gepreßt wird, welche ein oder mehrere Einlagen aufweist, so daß der resultierende Verstärkungsfasern enthaltende Körper zu diesen Einlagen korrespondierende Ausnehmungen aufweist, derart, daß die Verstärkungsfasern entlang dieser Ausnehmungen etwa parallel zu den Seitenkanten der Ausnehmungen orientiert sind.

Mit dem erfindungsgemäßen Verfahren werden z. Bsp. CFK-Körper oder Grünlinge mit optimierter Faserorientierung hergestellt. Das Verfahren zeichnet sich dadurch aus, daß die Grünlinge Ausnehmungen bzw. damit korrespondierende Vorsprünge oder Noppen aufweisen, wobei wegen der Fließfähigkeit der Preßmasse im Bereich der Ausnehmungen die Faserausrichtung der Preßkraft folgt. Beim Fügen derartiger Körper entsteht, bedingt durch die Faserorientierung, eine feste Verbindung an den Fügestellen.

Vorteilhafte Weiterbildungen der vorliegenden Erfindung ergeben sich aus den Unteransprüchen. Die Einlagen in der Preßform umfassen sowohl fest mit der Innenfläche der Preßform verbundene Vorsprünge oder sonstige Unebenheiten der Innenfläche als auch lose in die Preßform eingelegte Teile, wie Bolzen oder beliebig geformte Einlagen, z. Bsp. Quader, Sterne, Zapfen u. dgl..

Als Verstärkungsfasern sind bspw. Fasern, Faserstoffbündel oder Faseragglomerate auf der Basis von Kohlenstoff, Stickstoff, Bor und/oder Silizium geeignet. Gut geeignet sind z. Bsp. Kohlenstoff-Fasern oder SiC-Fasern. Die Fasern haben vorzugsweise eine Länge von 1 bis 30 mm.

Das mindestens eine carbonisierbare aushärtbare Bindemittel wird vorzugsweise in einem Anteil von etwa 5 bis 60 Gew.-% bezogen auf die Preßmasse verwendet.

Durch die Variation von Bindemittelanteil und Faserlänge läßt sich die Fließfähigkeit der resultierenden Preßmasse einstellen. Bei Bedarf können auch ein oder mehrere Fließpreßhilfsmittel verwendet werden.

Im folgenden wird eine Ausführungsform der vorliegenden Erfindung anhand der beigefügten Zeichnungen näher beschrieben. Es zeigen:
- Figur 1: eine schematische Darstellung zweier nach dem erfindungsgemäßen Verfahrens herstellbaren Grünlings zur Herstellung innenbelüfteter Bremsscheiben;
- Figur 2: eine schematische Darstellung eines gefügten Körpers aus den in Figur 1 gezeigten Grünlingen;
- Figur 3: Schliffbild einer Fügung mit einer Preßmasse enthaltend Fasern mit 15 bis 25 mm Länge und 40 bis 60 Gew.-% Phenolharz;
- Figur 4: Schliffbild einer Fügung mit einer Preßmasse enthaltend Fasern mit 15 bis 25 mm Länge und 5 bis 10 Gew.-% Phenolharz;
- Figur 5: Schliffbild einer Fügung mit einer Preßmasse enthaltend Fasern mit 2 bis 5 mm Länge und 40 bis 60 Gew.-% Phenolharz;
- Figur 6: Schliffbild einer Fügung mit einer Preßmasse enthaltend Fasern mit 2 bis 5 mm Länge und 5 bis 10 Gew.-% Phenolharz;
- Figuren 7 und 8: Aufnahmen der in Figur 6 gezeigten angeschnittenen Probe.

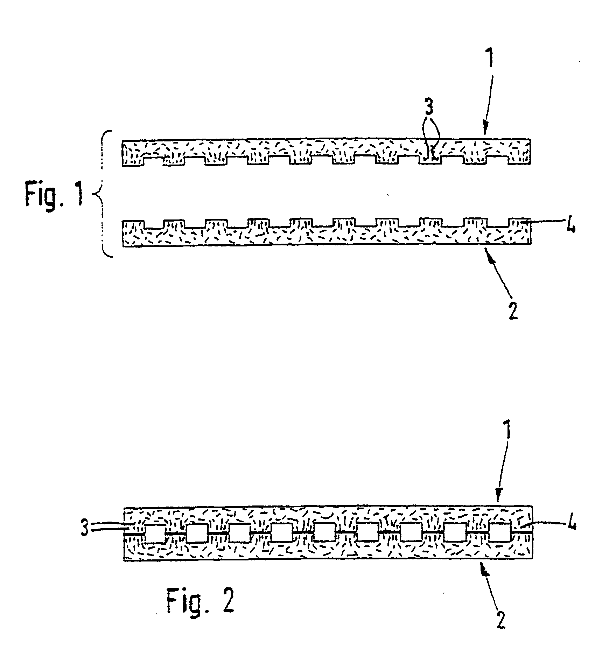

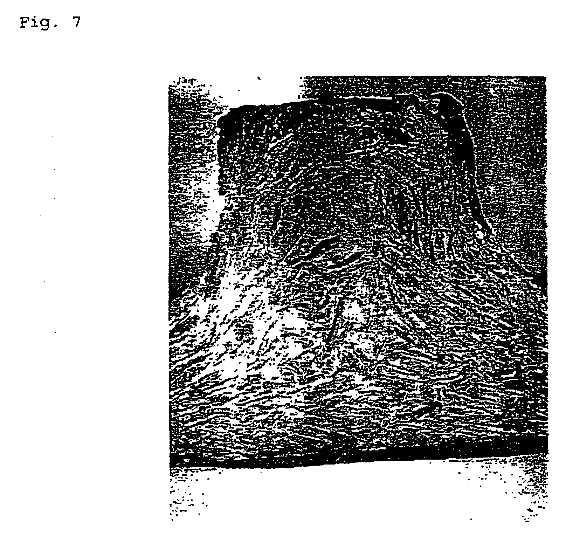

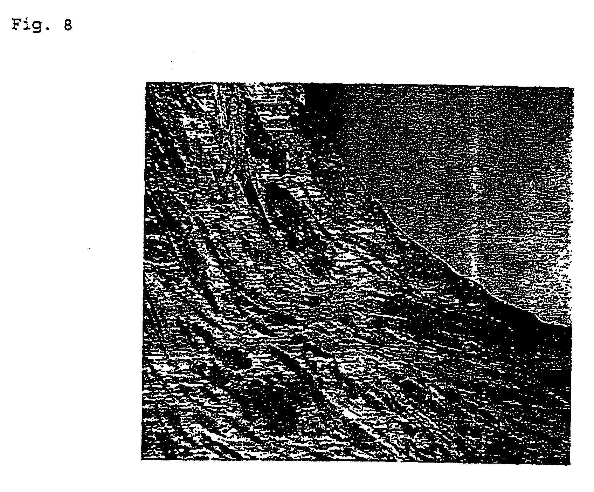

Das erfindungsgemäße Verfahren beruht auf der Erkenntnis, daß in Randbereichen innerhalb der Preßvorrichtung, also bspw. entlang von in der Preßvorrichtung vorgesehenen Vorsprüngen oder entlang von in die Preßvorrichtung eingelegten Bolzen o. dgl. die Fasern der Preßmasse sich entlang der auf sie einwirkenden Preßkraft orientieren. Bei der Herstellung von z. Bsp. Noppenscheiben findet diese Orientierung im Bereich der Noppen statt. Dazu wird in eine Preßvorrichtung Preßmasse eingefüllt und ein Lochblech eingelegt. Nach dem Pressen können zwei in Figur 1 schematisch dargestellte Noppenscheiben 1, 2 entnommen werden. Es zeigt sich, daß die Fasern 3 der Preßmasse entlang der Noppen 4 eine besondere Orientierung aufweisen, wie sie in Figur 1 angedeutet ist. Beim anschließenden Fügen hat sich herausgestellt, daß die Fügezone annähernd spaltfrei ist (Figuren 2 bis 8). Die Fügestelle ist deutlich zu erkennen. Das Gefüge besteht aus Kohlenstoff-Fasern und Kohlenstoff-Körnern.

Die Siliziumbestandteile liegen als Siliziumcarbid und freies Silizium vor.

Die Preßlinge wurden im Ausführungsbeispiel wie folgt hergestellt.

Kohlenstoff-Faserbündel von 15 bis 25 mm Länge bzw. 2 bis 5 mm Länge und undefinierter Bündelstärke wurden durch Tränken der Faserstoffbündel in einer Phenolharzlösung imprägniert. Anschließend erfolgte das Trocknen und Aushärten des Harzes bei 130°C im Umluft-Trockenschrank. Die getrockneten, beschichteten Kohlenstoff-Faserbündel wurden nun durch Tränken mit einer Pechlösung konditioniert. Die so beschichteten Fasern bildeten die Grundlagen für die Herstellung einer Preßmasse, die unter Zugabe von Kohlenstoffpulver und 40 bis 60 Gew.-% bzw. 5 bis 10 Gew.-% Phenolharz (Novolak "Bakelite 8978 FL") in einem Mischkneter aufbereitet wurde. Während der Knetung wurde kontinuierlich eine Mischung von Titancarbid und Borcarbid in Pulverform zugegeben. Die so aufbereitete Masse wurde zu einer Noppenscheibe verpreßt, wobei eine endformnahe Preßmatrize verwendet wurde, in der die Masse bei einer Temperatur von mindestens 50°C zu formstabilen Noppenscheiben ausgehärtet wurden. Darauf erfolgte eine Pyrolyse bei etwa 800°C in einem Pyrolyseofen unter Schutzgas. Anschließend wurde das Material bei einer Temperatur oberhalb der Siliziumschmelztemperatur, d. h. etwa 1600°C, unter Vakuum mit einer flüssigen Siliziumschmelze infiltriert und anschließend auf Raumtemperatur abgekühlt.

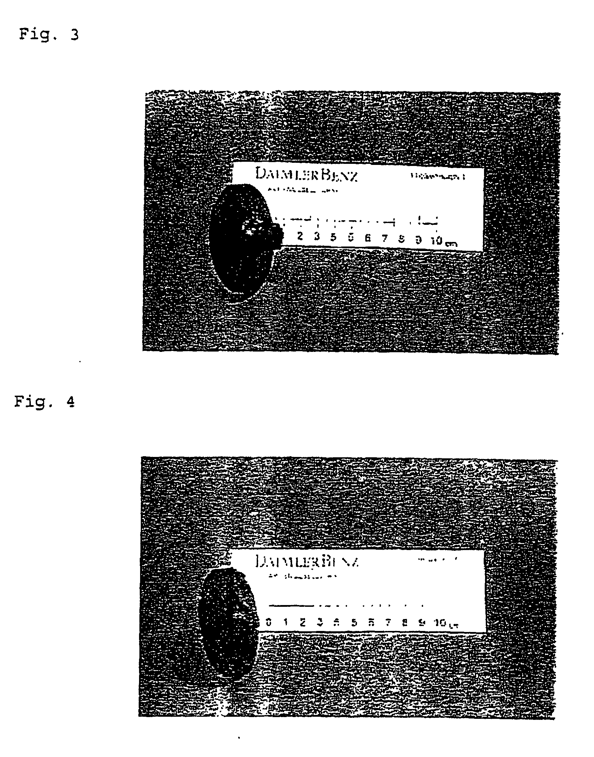

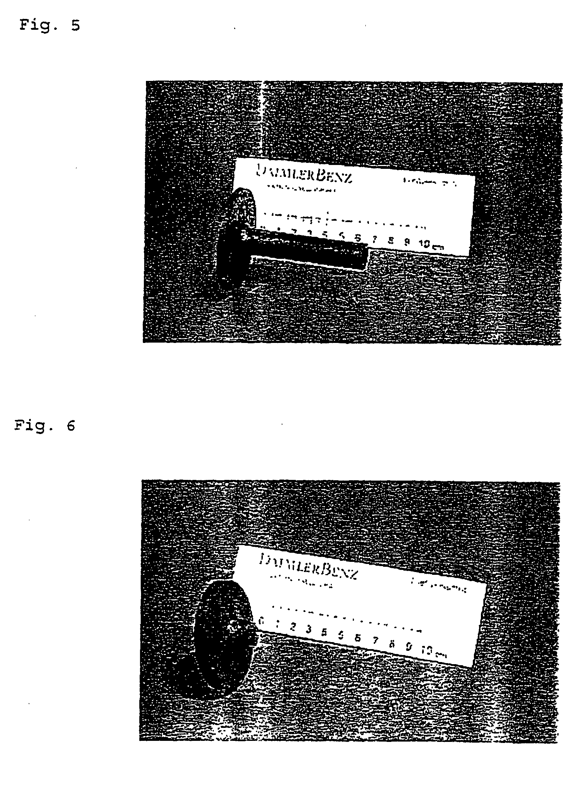

Wie sich aus den beiliegenden Schliffbildern (Figuren 3 bis 8) ergibt, zeigen die Faserbündel im Bereich der Noppen eine Vorzugsorientierung parallel zu den Seitenkanten der Noppen. Dabei wurden alle Kombinationen einer Preßmasse mit hohem Bindemittelanteil von 40 bis 60 Gew.-% Phenolharz (Figuren 3 und 5) und einer Preßmasse mit niedrigem Bindeanteil von 5 bis 10 Gew.-% Phenolharz (Figuren 2 und 4) mit Fasern mit 15 bis 25 mm (Figuren 1 und 2) Länge und Fasern mit 2 bis 5 mm Länge (Figuren 3 und 4) verglichen. Beides Mal lag der Preßdruck bei 100 bar.

In den Bildern ist die günstige Ausrichtung der Fasern zur Krafteinleitung deutlich zu erkennen. Mit der Variation in Richtung kürzerer Faserlänge und höherer Bindemittelanteile läßt sich die Fließfähigkeit deutlich verbessern.

## Patentansprüche

1. Verfahren zur Herstellung von Verstärkungsfasern enthaltenden . Körpern, wobei Fasern, Faserbündel oder Faseragglomerate mit wenigstens einem carbonisierbaren Bindemittel zu einer Preßmasse vermischt werden und die Preßmasse zu einem Verstärkungsfasern enthaltenden Körper gepreßt wird, wobei eine Preßvorrichtung mit einer endformnahen Preßform verwendet wird,
**dadurch gekennzeichnet,**
**daß** die Preßmasse in einer Preßform gepreßt wird, welche Einlagen aufweist, so daß der resultierende Verstärkungsfasern enthaltende Körper zu diesen Einlagen korrespondierende Ausnehmungen aufweist, derart, daß die Verstärkungsfasern entlang dieser Ausnehmungen etwa parallel zu den Seitenkanten der Ausnehmungen orientiert sind.

2. Verfahren nach Anspruch 1,
**dadurch gekennzeichnet,**
**daß** der Preßmasse weitere Füllstoffe und/oder Zusatzstoffe zugegeben werden.

3. Verfahren nach Anspruch 1 oder 2,
**dadurch gekennzeichnet,**
**daß** die Einlagen in Form von fest mit der Innenfläche der Preßform verbundenen Vorsprüngen und/oder in Form von lose eingelegten Teilen vorliegen.

4. Verfahren nach Anspruch 3,
**dadurch gekennzeichnet,**
**daß** als bewegliche Teile Bolzen verwendet werden.

5. Verfahren nach einem der vorhergehenden Ansprüche,
**dadurch gekennzeichnet,**
**daß** als Verstärkungsfasern Fasern, Faserstoffbündel oder Faseragglomerate auf der Basis von Kohlenstoff, Stickstoff, Bor und/oder Silizium, insbesondere aus Kohlenstoff oder Siliziumcarbid verwendet werden.

6. Verfahren nach einem der vorhergehenden Ansprüche,
**dadurch gekennzeichnet,**
**daß** Fasern mit einer Faserlänge von etwa 1 bis 30 mm verwendet werden.

7. Verfahren nach einem der vorhergehenden Ansprüche,
**dadurch gekennzeichnet,**
**daß** das mindestens eine carbonisierbare, aushärtbare Bindemittel in einem Anteil von etwa 5 bis 60 Gew.-% bezogen auf die Preßmasse verwendet wird.

8. Verfahren nach einem der vorhergehenden Ansprüche,
**dadurch gekennzeichnet,**
**daß** als weiterer Zusatzstoff zumindest ein oder mehrere Fließpreßhilfsmittel verwendet werden.

9. Verwendung des gemäß den Ansprüche 1 bis 8 hergestellten Körpers als CFK-Noppenscheiben zur späteren Fügung zu Bremsscheiben.

10. Verfahren zum Fügen von Verstärkungsfasern enthaltenden Körpern, wobei Fasern, Faserbündel oder Faseragglomerate mit wenigstens einem carbonisierbaren Bindemittel zu einer Preßmasse vermischt werden und die Preßmasse zu einem Verstärkungsfasern enthaltenden Körper gepreßt wird, wobei eine Preßvorrichtung mit einer endformnahen Preßform verwendet wird, und der resultierende Körper pyrolysiert wird, so daß das mindestens eine carbonisierbare Bindemittel in eine poröse Kohlenstoff-Matrix umgewandelt wird und anschließend zwei oder mehrere dieser porösen Körper in Kontakt gebracht und mit Metall bzw. Silizium schmelzinfiltriert werden,
**dadurch gekennzeichnet,**
**daß** Verstärkungsfasern enthaltende Körper verwendet werden, die nach einem Verfahren gemäß einem der Ansprüche 1 bis 8 herstellbar sind.

11. Verfahren nach Anspruch 10,
**dadurch gekennzeichnet,**
**daß** der Preßmasse weitere Füllstoffe und/oder Zusatzstoffe zugegeben werden.

12. Verwendung eines gemäß den Ansprüchen 10 oder 11 hergestellten Körpers für die Herstellung von innenbelüfteten Bremsscheiben aus faserverstärkter Verbundkeramik.

## Claims

1. Process for the production of solid bodies containing reinforcing fibres, such that fibres, fibre bundles or fibre agglomerates are mixed with at least one carbonisable binder to form a mouldable material and the mouldable material is compressed to form a body containing reinforcing fibres, a pressing device with a pressing mould close to the end shape being used,
**characterised in that**
the mouldable material is compressed in a pressing mould which contains inserts so that the resulting body containing reinforcing fibres has recesses which correspond to the said inserts, in such manner that the reinforcing fibres are orientated along the said recesses approximately parallel to the lateral edges of the recesses.

2. Process according to Claim 1,
**characterised in that**
the mouldable material contains other fillers and/or additives.

3. Process according to Claims 1 or 2,
**characterised in that**
the inserts are present in the form of projections firmly attached to the inside surface of the pressing mould and/or in the form of free inlaid components.

4. Process according to Claim 3,
**characterised in that**
bolts are used as the moving parts.

5. Process according to any of the preceding claims,
**characterised in that**
as the reinforcing fibres, fibres, fibre bundles or fibre agglomerates are used, which are based on carbon, nitrogen, boron and/or silicon, in particular carbon or silicon-carbide.

6. Process according to any of the preceding claims,
**characterised in that**
fibres with a fibre length of approximately 1 to 30 mm are used.

7. Process according to any of the preceding claims,
**characterised in that**
the at least one carbonisable, hardenable binder is used in a proportion of approximately 5 to 60 weight-% relative to the mouldable material.

8. Process according to any of the preceding claims,
**characterised in that**
as a further additive, at least one or more flow-moulding promoters are used.

9. Use of the body produced in accordance with Claims 1 to 8 as carbon-fibre-reinforced ceramic knub discs for subsequent joining to brake discs.

10. Process for joining bodies containing reinforcing fibres, such that fibres, fibre bundles or fibre agglomerates are mixed with at least one carbonisable binder to form a mouldable material and the mouldable material is compressed to form a body containing reinforcing fibres, a pressing device with a pressing mould close to the end shape being used, and the resulting body is pyrolysed, so that the at least one carbonisable binder is transformed into a porous carbon matrix and then two or more of these porous bodies are brought into contact and melt-infiltrated with metal or silicon,
**characterised in that**
bodies containing reinforcing fibres are used, which can be made by a process according to any of Claims 1 to 8.

11. Process according to Claim 10,
**characterised in that**
the moulding material contains further fillers and/or additives.

12. Use of a body produced in accordance with Claims 10 or 11 for the manufacture of internally ventilated brake discs made of a fibre-reinforced composite ceramic.

## Revendications

1. Procédé de fabrication de corps contenant des fibres de renforcement, des fibres, des faisceaux de fibres ou des agglomérats de fibres avec au moins un liant carbonisable étant mélangés en une matière à mouler et la matière à mouler étant moulée en un corps contenant des fibres de renforcement, un dispositif de moulage avec un moule proche du format fini étant utilisé, **caractérisé en ce que** la matière à mouler est moulée dans un moule qui comporte des pièces intercalaires, de sorte que le corps résultant contenant des fibres de renforcement présente des creux correspondant à ces pièces intercalaires, de sorte que les fibres de renforcement sont orientées le long de ces creux à peu près parallèlement aux arêtes latérales de ces creux.

2. Procédé selon la revendication 1, **caractérisé en ce que** d'autres matières de charge et/ou d'autres adjuvants sont ajoutés à la matière à mouler.

3. Procédé selon la revendication 1 ou 2, **caractérisé en ce que** les pièces intercalaires se présentent sous forme de pièces en saillie liées de manière inamovible à la surface intérieure du moule et/ou sous forme de pièces insérées de manière mobile.

4. Procédé selon la revendication 3, **caractérisé en ce que** des boulons sont utilisés comme pièces mobiles.

5. Procédé selon l'une des revendications précédentes, **caractérisé en ce que** l'on utilise comme fibres de renforcement des fibres, des faisceaux de fibres ou des agglomérats de fibres à base de carbone, d'azote, de bore ou de silicium, en particulier à base de carbone ou de carbure de silicium.

6. Procédé selon l'une des revendications précédentes, **caractérisé en ce que** l'on utilise des fibres ayant une longueur de fibre comprise entre environ 1 et 30 mm.

7. Procédé selon l'une des revendications précédentes, **caractérisé en ce que** l'on utilise au moins un liant carbonisable, durcissable selon une portion comprise entre environ 5% et 60% en poids par rapport à la matière à mouler.

8. Procédé selon l'une des revendications précédentes, **caractérisé en ce que** l'on utilise comme autre adjuvant au moins un ou plusieurs auxiliaire de filage.

9. Utilisation du corps fabriqué selon les revendications 1 à 8 comme disque à nopes en plastique chargé à fibres artificielles pour insertion ultérieure dans des disques de frein.

10. Procédé pour l'insertion de corps contenant des fibres de renforcement, des fibres, des faisceaux de fibres ou des agglomérats de fibres avec au moins un liant carbonisable étant mélangés en une matière à mouler et la matière à mouler étant moulée en un corps contenant des fibres de renforcement, un dispositif de moulage avec un moule proche du format fini étant utilisé, et le corps résultant étant pyrolysé, de sorte que le moins un liant carbonisable est converti en une matrice poreuse de carbone et, ensuite, deux ou plusieurs de ces corps poreux sont mis en contact et soumis à une infiltration de métal ou de silicium par fusion, **caractérisé en ce que** l'on utilise des corps contenant des fibres de renforcement qui peuvent être fabriqués selon un procédé selon l'une des revendications 1 à 8.

11. Procédé selon la revendication 10, **caractérisé en ce que** d'autres matières de charge et/ou d'autres adjuvants sont ajoutés à la matière à mouler.

12. Utilisation d'un corps fabriqué selon la revendication 10 ou 11 pour la fabrication de disques de freins à ventilation intérieure en céramique composite renforcée par des fibres.
